# EUROPÄISCHE PATENTSCHRIFT

(11) **EP 0 524 497 B1**
(45) Veröffentlichungstag und Bekanntmachung des Hinweises auf die Patenterteilung: **27.09.1995**
(21) Anmeldenummer: 92111671.1
(22) Anmeldetag: 09.07.1992
(51) Int. Cl.: C08F 14/00, C08F 14/06

(54) **Wässrige Polymerisatdispersionen**
Aqueous polymer dispersions
Dispersions aqueuses de polymères

(30) Priorität: 26.07.1991 DE 4124817
(43) Veröffentlichungstag der Anmeldung: 27.01.1993
(73) Patentinhaber: BASF Aktiengesellschaft, 67063 Ludwigshafen (DE)
(72) Erfinder: Grubert, Heinrich, Dr., W-6900 Heidelberg (DE); Dersch, Rolf, Dr., W-6730 Neustadt (DE); Neutzner, Josef, Dr., W-6730 Neustadt (DE); Hummerich, Rainer, Dr., W-6520 Worms 27 (DE); Claassen, Peter Joseph Maria W., NL-6902 Al Zevenaar (NL)
(74) Vertreter: Riedl, Peter, Dr.

(56) Entgegenhaltungen:
- EP-A- 0 469 397
- DE-A- 1 595 412

## Beschreibung

Die vorliegende Erfindung betrifft wäßrige Polymerisatdispersionen, die dadurch erhältlich sind, daß man ein Monomerengemisch, das 10 bis 100 Gew.-% an halogenhaltigen Monomeren enthält, nach der Methode der radikalischen Emulsionspolymerisation in wäßrigem Medium polymerisiert, den pH-Wert der wäßrigen Phase der dabei anfallenden wäßrigen Polymerisatdispersion durch Zugabe von von Ammoniak sowie von primären und sekundären Aminen verschiedenen basischen Mitteln auf einen Wert von 5 bis 10 einstellt und, bezogen auf das Monomerengemisch, 0,005 bis 1, vorzugsweise 0,05 bis 0,5 Gew.-% wenigstens einer Wirksubstanz aus der Gruppe Benzaldehyd, Derivate des Benzaldehyds die am aromatischen Kern einen oder zwei C₁- bis C₄-Alkylreste aufweisen, Benzylalkohol, Campher, Ester aus Ameisensäure und C₃- bis C₆-Alkanolen, C₁₀- bis C₂₂-ungesättigte Fettsäuren, Tetraalkylorthosilicate mit 1 bis 4 C-Atome aufweisenden Alkylresten, Bis-(4-hydroxyphenyl)sulfon, Zitronensäure und deren Salze sowie Salze des Guanidins mit organischen oder anorganischen Säuren zusetzt, wobei sowohl die Zugabe der basischen Mittel als auch der wenigstens einen Wirksubstanz vor, während und/oder nach der Emulsionspolymerisation erfolgen kann.

Wäßrige Polymerisatdispersionen mit im Polymeranteil eingebauten halogenhaltigen Monomeren eignen sich in vielfältiger Weise als Bindemittel, insbesondere dort, wo auf erhöhte Brandsicherheit Wert gelegt wird, da ihre Verfilmungen eine reduzierte Neigung zum Entflammen aufweisen.

Es ist bekannt, daß die wäßrige Phase von ohne basische Hilfsmittel hergestellten wäßrigen Polymerisatdispersionen in der Regel einen pH-Wert < 5 aufweist, was sich für zahlreiche Verwendungen nachteilig auswirkt, so daß der pH-Wert im allgemeinen durch Zusatz basischer Mittel erhöht wird.

Aus der DE-A 2 246 499 ist bekannt, daß sich ursprünglich weiße Dispersionen mit einpolymerisiertem Vinylchlorid und/oder Vinylidenchlorid im Polymerisatanteil durch Zugabe basischer Stoffe braun verfärben, und daß dieses Verfärben durch Zusatz geringer Mengen wenigstens einer Epoxidverbindung im wesentlichen unterdrückt werden kann. Nachteilig an einem Zusatz von Epoxiden ist jedoch, daß Epoxide auf den Polymerisatanteil der wäßrigen Dispersion gleichzeitig vernetzend wirken.

Die ältere Anmeldung P 40 24 154.8 betrifft sich im wesentlichen nicht verfärbende wäßrige Polymerisatdispersionen, die dadurch erhältlich sind, daß man ein Monomerengemisch, das 10 bis 100 Gew.-% an halogenhaltigen Monomeren enthält, in Gegenwart von 0,5 bis 6 Gew.-%, bezogen auf das Monomerengemisch, an ausschließlich anionischen und/oder nichtionischen grenzflächenaktiven Substanzen nach der Methode der radikalischen Emulsionspolymerisation in wäßrigem Medium polymerisiert und den pH-Wert der wäßrigen Phase der dabei anfallenden wäßrigen Polymerisatdispersion durch Zugabe von von Ammoniak sowie von primären und sekundären Aminen verschiedenen basischen Mitteln auf einen Wert von 5 bis 10 einstellt. Nachteilig an diesen Dispersionen und ihren Verfilmungen ist, daß ihr Verfärbungsverhalten als Funktion der Zeit nicht voll zu befriedigen vermag.

Die ältere Anmeldung P 40 24 150.5 betrifft sich nicht verfärbende wäßrige Polymerisatdispersionen, die dadurch erhältlich sind, daß man ein Monomerengemisch, das 10 bis 100 Gew.-% an halogenhaltigen Monomeren enthält, nach der Methode der radikalischen Emulsionspolymerisation in wäßrigem Medium polymerisiert, den pH-Wert der wäßrigen Phase der dabei anfallenden wäßrigen Polymerisatdispersion durch Zugabe von von Ammoniak sowie von primären und sekundären Aminen verschiedenen basischen Mitteln auf einen Wert von 5 bis 10 einstellt und, bezogen auf das Monomerengemisch, 0,005 bis 1 Gew.-% wenigstens einer Wirksubstanz aus der Gruppe Glycerin, Pivalinsäure, Paraldehyd, 2,6-Di-tert.-butyl-p-kresol, Benzophenon, alkylsubstituierte Benzophenone, Thioschwefelsäure und ihre Salze sowie Oxalsäure und ihre Salze zusetzt, wobei Thioschwefelsäure und ihre Salze mit besonderem Vorteil als Wirksubstanz empfohlen werden.

Aufgabe der vorliegenden Erfindung war daher, wäßrige Polymerisatdispersionen mit einpolymerisierten halogenhaltigen Monomeren im Polymerisatanteil zur Verfügung zu stellen, deren pH-Wert durch Zusatz basischer Mittel auf einen Wert von 5 bis 10 eingestellt wird und die ebenso wie ihre Verfilmungen durch Zusatz einer von Epoxiden sowie von den in der älteren Anmeldung P 40 24 150.5 genannten Wirksubstanzen verschiedenen Wirksubstanz auch nach längerer Lagerung in voll befriedigender Weise keine Verfärbung aufweisen.

Demgemäß wurden die eingangs definierten wäßrigen Polymerisatdispersionen gefunden. Die Wirksamkeit der genannten Wirksubstanzen ist derjenigen von Thioschwefelsäure und ihren Salzen wenigstens gleichwertig. Mit besonderem Vorteil werden als Wirksubstanz Benzaldehyd, Campher, Benzylalkohol, der Ester aus Ameisensäure und n-Butanol, ölsäure, Tetraethylorthosilicat und Bis-(4-hydroxyphenyl)sulfon, insbesondere aber Zitronensäure und ihre Salze, z.B. die Alkalimetallsalze, sowie die Salze des Guanidins mit anorganischen Mineralsäuren eingesetzt, wobei insbesondere die beiden letzten Gruppierungen in ihrer Wirksamkeit der Thioschwefelsäure und ihren Derivaten überlegen sind und innerhalb dieser Gruppierungen wiederum die reine Zitronensäure sowie die Salze des Guanidins mit Salzsäure, Schwefelsäure, Phosphorsäure, Kohlensäure und Wasser, vor allem das Salz des Guanidins mit Salzsäure, besonders herausragen.

Bevorzugte halogenhaltige Monomere sind Vinylbromid, Vinylchlorid und Vinylidenchlorid, unter denen Vinylchlorid und Vinylidenchlorid besonders bevorzugt werden. Als Comonomere eignen sich beispielsweise Ester der Acryl- oder Methacrylsäure mit 1 bis 10 C-Atome enthaltenden aliphatischen Alkoholen, wobei die Methyl-, Ethyl-, Isopropyl-, n-, iso- und tert.-Butyl-, n-Hexyl- sowie 2-Ethylhexylester bevorzugt sind. Ferner eignen sich als Comonomere α,β-monoethylenisch ungesättigte Carbonsäuren wie Acryl- und Methacrylsäure, Vinylester niederer Alkancarbonsäuren wie Vinylacetat und Vinylpropionat, Nitrile von niederen α,β-monoethylenisch ungesättigten Carbonsäuren wie Acrylnitril und Methacrylnitril sowie die Amide dieser Carbonsäuren, Acrylsäure- oder Methacrylsäureester mit niederen mehrwertigen Alkoholen, ungesättigte Sulfon- und Phosphonsäuren, aber z.B. auch niedere einfach- oder mehrfach ungesättigte Kohlenwasserstoffe wie Ethylen, Propen und Butadien. Vorzugsweise enthält das zu polymerisierende Monomerengemisch, bezogen auf die Gesamtmenge der Monomeren, 20 bis 90 Gew.-% an halogenhaltigen Monomeren.

Geeignete Polymerisationsinitiatoren sind vor allem anorganische Peroxide wie Natrium-, Kalium- oder Ammoniumperoxidisulfat und Wasserstoffperoxid. Ferner eignen sich Azoverbindungen wie 2,2' -Azobisisobutyronitril sowie organische Peroxide wie Dibenzoylperoxid, t-Butylperpivalat oder Hydroperoxide wie t-Butylhydroperoxid, aber auch kombinierte Systeme, die aus wenigstens einem organischen Reduktionsmittel und wenigstens einem Peroxid und/oder Hydroperoxid zusammengesetzt sind, z.B. t-Butylhydroperoxid und das Na-Salz der Hydroxymethansulfinsäure, sowie kombinierte Systeme, die darüberhinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen (II) sulfat/Natriumperoxidisulfat, wobei anstelle von Ascorbinsäure auch häufig das Na-Salz der Hydroxymethansulfinsäure, Natriumsulfit, Natriumhydrogensulfit oder Natriummetabisulfit eingesetzt werden.

Die für die Emulsionspolymerisation eingesetzte Menge an Polymerisationsinitiatoren wird vorzugsweise niedrig gehalten und liegt, bezogen auf die Monomeren, in der Regel bei 0,05 bis 1 Gew.-%, vorzugsweise beträgt ihr Anteil 0,1 bis 0,3 Gew.-%. Weniger bevorzugt sind Mengen von bis zu 10 Gew.-%.

Als Emulgatoren können sowohl anionische, kationische als auch nichtionische Emulgatoren sowie verträgliche Mischungen derselben eingesetzt werden. Bezogen auf das Gesamtgewicht der zu polymerisierenden Monomeren beträgt ihr Gewichtsanteil in der Regel 0,05 bis 10 Gew.-%. Mit besonderem Vorteil werden ausschließlich nichtionische und anionische Emulgatoren sowie deren Gemische verwendet.

Vorzugsweise eingesetzte nichtionische Emulgatoren sind ethoxylierte Alkanole (EO-Grad: 2 bis 100, Alkylrest: C₈ bis C₃₆), ethoxylierte 1 bis 4 olefinische Doppelbindungen enthaltende Alkohole (EO-Grad: 2 bis 100, Kettenlänge: C₈ bis C₃₆), ethoxylierte mono-, di- oder tri-Alkylphenole oder -naphthole (EO-Grad: 2 bis 100, Alkylrest: C₄ bis C₃₆), ethoxylierte aliphatische Monocarbonsäuren (EO-Grad: 6 bis 50, Alkylrest: C₈ bis C₂₄) und ethoxylierte 1 bis 4 olefinische Doppelbindungen enthaltende Monocarbonsäuren (EO-Grad: 6 bis 50, Alkylrest: C₈ bis C₂₄).

In vorteilhafter Weise eingesetzte anionische Emulgatoren sind die Alkalimetall- und Ammoniumsalze der sulfatierten Derivate von 6 bis 18 C-Atome enthaltenden Alkanolen, 6 bis 18 C-Atome und 1 bis 4 olefinische Doppelbindungen enthaltenden Alkoholen, ethoxylierten Alkanolen (EO-Grad: 4 bis 30, Alkylrest: C₁₂ bis C₁₈), ethoxylierten 1 bis 4 olefinische Doppelbindungen enthaltenden Alkoholen (EO-Grad: 4 bis 30, Alkylrest: C₁₂ bis C₁₈) und von ethoxylierten Alkylphenolen (EO-Grad: 4 bis 30, Alkylrest: C₈ bis C₁₄), die Alkalimetall- und Ammoniumsalze gesättigter und ungesättigter Carbonsäuren (Kettenlänge: C₈ bis C₂₄), die Alkalimetall- und Ammoniumsalze von 12 bis 18 C-Atome enthaltenden Alkylsulfonsäuren sowie die entsprechenden Salze von Alkylarylsulfonsäuren (Alkylrest: C₁₀ bis C₁₈) und von Estern der Sulfobernsteinsäure mit 4 bis 18 C-Atomen enthaltenden Alkoholen.

Neben Emulgatoren können auch Schutzkolloide als grenzflächenaktive Substanzen bei der Emulsionspolymerisation mitverwendet werden. Geeignete Schutzkolloide sind z.B. hochmolekulare Verbindungen wie Polyvinylalkohole, Polyvinylpyrrolidone, Cellulosederivate, Polyacrylamide, Polymethacrylamide, Polycarbonsäuren oder deren Alkalimetall- oder Ammoniumsalze. Weiterhin können im Rahmen der Emulsionspolymerisation auch das Molekulargewicht regelnde Substanzen mitverwendet werden.

Vorzugsweise werden solche Initiatoren und grenzflächenaktiven Substanzen eingesetzt, die keine Ammoniumionen enthalten.

Die Emulsionspolymerisationstemperatur beträgt in der Regel 30 bis 90°C. Besonders an Verfärbungen freie erfindungsgemäße Dispersionen werden jedoch dann erhalten, wenn die Emulsionspolymerisationstemperatur 30 bis 70°C beträgt. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Chargenprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt und anschließend den Rest in getrennten Zuläufen, von denen einer oder mehrere die Monomeren in reiner oder in emulgierter Form enthalten, kontinuierlich, stufenweise oder unter Überlagerung eines Konzentrationsgefälles zuführt. Der Feststoffgehalt der so erhältlichen wäßrigen Polymerisatdispersion beträgt im allgemeinen 5 bis 60 Gew.-%.

Als basische Mittel für die Erhöhung des pH-Wertes kommen insbesondere Metallsalze schwacher Säuren, z.B. Alkalimetallacetate, -formiate oder -carbonate, tertiäre Amine wie Triethylamin, vor allem aber Alkalimetall- und Erdalkalimetallhydroxide sowie -oxide wie KOH, NaOH und Ca(OH)₂ in Betracht, unter denen Ca(OH)₂ besonders bevorzugt wird.

Überraschenderweise weisen sowohl die erfindungsgemäßen wäßrigen Polymerisatdispersionen als auch deren Verfilmungen, auch nach längerer Lagerung, im wesentlichen keine Verfärbung auf.

### Beispiele

### a) Herstellung von Ausgangsdispersionen D 1 bis D 8

- D 1:: Eine Mischung aus 25 kg Wasser, 0,02 kg Emulgator I, 0,03 kg Natriumperoxidisulfat (Na₂S₂O₈) und 0,0005 kg Eisen (II) sulfat-Heptahydrat (FeSO₄ · 7 H₂O) wurde auf die Polymerisationstemperatur von 50°C erhitzt und mit 5 % eines Zulaufs 1 sowie 5 % eines Zulaufs 2 versetzt und während 15 min bei 50°C gehalten. Anschließend wurden unter Aufrechterhaltung der Polymerisationstemperatur synchron die verbliebene Menge an Zulauf 1 sowie die verbliebene Menge an Zulauf 2 und ein Zulauf 3 während 3,5 h kontinuierlich zugesetzt. Danach wurden ebenfalls bei 50°C während 30 min ein Zulauf 4 und während 1 h ein Zulauf 5 kontinuierlich zugeführt. Nachfolgend wurde unter Zugabe einer Mischung aus 0,12 kg einer 70 gew.-%igen wäßrigen-alkoholischen Lösung von t-Butylhydroperoxid und 0,05 kg Emulgator I in 0,35 kg Wasser und anschließender Zugabe von 0,17 kg des Na-Salzes der Hydroxymethansulfinsäure in 0,35 kg Wasser bei Raumtemperatur nachpolymerisiert.
- Zulauf 1:: 55 kg Vinylchlorid
10 kg Vinylpropionat
35 kg n-Butylacrylat
1,7 kg Emulgator II
0,78 kg Emulgator I und
41 kg Wasser
- Zulauf 2:: 0,003 kg Na-Salz der Hydroxymethansulfinsäure
0,125 kg Natriumacetat und
14 kg Wasser
- Zulauf 3:: 0,162 kg Natriumperoxidisulfat und
12 kg Wasser
- Zulauf 4:: 0,048 kg Natriumperoxidisulfat und
4 kg Wasser
- Zulauf 5:: 0,0018 kg Na-Salz der Hydroxymethansulfinsäure
0,0273 kg Natriumacetat und
4 kg Wasser
- Emulator I:: Na-Salz des sulfatierten Derivats von ethoxyliertem iso-Octylphenol (EO-Grad: 25)
- Emulgator II:: ethoxyliertes iso-Octylphenol (EO-Grad: 25)
- D 2 bis D 4:: Wie D 1, jedoch wurde die Emulsionspolymerisation in der genannten Abfolge anstelle von 50°C bei 60, 70 sowie 80°C durchgeführt.
- D 5 bis D 8:: In der genannten Abfolge wie D 1 bis D 4, jedoch wurde die Menge an eingesetztem Natriumperoxidisulfat jeweils um 50 % erhöht.

### b) Zusatz von basischen Mitteln sowie von Wirksubstanzen zu den Dispersionen D 1 bis D 8 und überprüfung auf Verfärbung

Der pH-Wert der wäßrigen Phase der Dispersionen D 1 bis D 8 wurde jeweils durch Zusatz von Ammoniak, KOH, NaOH sowie Ca(OH)₂ auf einen Wert von 8 erhöht und anschließend wurden, bezogen auf den Feststoffgehalt der wäßrigen Dispersionen, jeweils 0,1 Gew.-% der nachfolgenden Wirksubstanzen zugesetzt und nach einigen Tagen die Verfärbung visuell beurteilt:
Benzaldehyd, Campher, Benzylalkohol, Ester aus Ameisensäure und n-Butanol, ölsäure, Tetraethylorthosilicat, Bis(4-hydroxyphenyl)sulfon, Zitronensäure, Salz des Guanidins mit Chlorwasserstoff (Salzsäure).

Bei der Verwendung von Ammoniak trat eine deutliche Gelbfärbung auf, wohingegen bei Verwendung von KOH und NaOH nur ein minimaler Gelbstich und bei Verwendung von Ca(OH)₂ keine Verfärbung auftrat. Den härtesten Weißton wies die Dispersion auf, die Ca(OH)₂ und Zitronensäure oder Ca(OH)₂ und das Salz des Guanidins mit Chlorwasserstoff enthielt. Weiterhin wurden solche frisch hergestellte Dispersionen verfilmt, im Trockenschrank bei 50°C 14 Tage gelagert und wieder visuell auf Verfärbung beurteilt. Die Ergebnisse entsprachen jenen für den flüssigen Zustand. In allen Fällen waren die Verfärbungen bei Mitverwendung der erfindungsgemäßen Wirksubstanzen geringer als in Abwesenheit derselben, wobei die Wirkung von Zitronensäure und des Salzes des Guanidins mit Chlorwasserstoff derjenigen von Natriumthiosulfat (Vergleichsversuch) überlegen und die Wirkung der anderen Wirksubstanzen derjenigen des Natriumthiosulfats im wesentlichen gleichwertig war.

## Patentansprüche

1. Wäßrige Polymerisatdispersionen, dadurch erhältlich, daß man ein Monomerengemisch, das 10 bis 100 Gew.-% an halogenhaltigen Monomeren enthält, nach der Methode der radikalischen Emulsionspolymerisation in wäßrigem Medium polymerisiert, den pH-Wert der wäßrigen Phase der dabei anfallenden wäßrigen Polymerisatdispersion durch Zugabe von von Ammoniak sowie von primären und sekundären Aminen verschiedenen basischen Mitteln auf einen Wert von 5 bis 10 einstellt und, bezogen auf das Monomerengemisch, 0,005 bis 1 Gew.-% wenigstens einer Wirksubstanz aus der Gruppe Benzaldehyd, Derivate des Benzaldehyds die am aromatischen Kern einen oder zwei C₁- bis C₄-Alkylreste aufweisen, Benzylalkohol, Campher, Ester aus Ameisensäure und C₃- bis C₆-Alkanolen, C₁₀- bis C₂₂-ungesättigte Fettsäuren, Tetraalkylorthosilicate mit 1 bis 4 C-Atome aufweisenden Alkylresten, Bis(4-hydroxyphenyl)sulfon, Zitronensäure und deren Salze sowie Salze des Guanidins mit organischen oder anorganischen Säuren zusetzt, wobei sowohl die Zugabe der basischen Mittel als auch der wenigstens einen Wirksubstanz vor, während und/oder nach der Emulsionspolymerisation erfolgen kann.

2. Wäßrige Polymerisatdispersionen nach Anspruch 1, dadurch erhältlich, daß man als Wirksubstanz wenigstens eine aus der Gruppe Zitronensäure und ihre Salze und Salze des Guanidins mit organischen oder anorganischen Säuren einsetzt.

3. Wäßrige Polymerisatdispersionen nach den Ansprüchen 1 oder 2, dadurch erhältlich, daß man als Wirksubstanz Zitronensäure, das Salz des Guanidins mit Chlorwasserstoff oder ein Gemisch dieser Wirkstoffe einsetzt.

## Claims

1. An aqueous polymer emulsion obtainable by polymerizing a monomer mixture which contains from 10 to 100% by weight of halogen-containing monomers by the free radical emulsion polymerization method in an aqueous medium, bringing the pH of the aqueous phase of the resulting aqueous polymer emulsion to 5-10 by adding a basic agent which is not ammonia or a primary or secondary amine, and adding from 0.005 to 1% by weight, based on the monomer mixture, of at least one active substance selected from the group consisting of benzaldehyde, derivatives of benzaldehyde which have one or two C₁-C₄-alkyl radicals in the aromatic nucleus, benzyl alcohol, campher, esters of formic acid and C₃-C₆-alkanols, unsaturated C₁₀-C₂₂-fatty acids, tetraalkyl orthosilicates where the alkyl radicals are of 1 to 4 carbon atoms, bis(4-hydroxyphenyl) sulfone, citric acid and the salts thereof and salts of guanidine with organic or inorganic acids, it being possible to add both the basic agent and one or more active substances before, during or after the emulsion polymerization.

2. An aqueous polymer emulsion as claimed in claim 1, obtainable using, as the active substance, at least one selected from the group consisting of citric acid and its salts and salts of guanidine with organic or inorganic acids.

3. An aqueous polymer emulsion as claimed in claim 1 or 2, obtainable using, as the active substance, citric acid, the salt of guanidine with hydrogen chloride or a mixture of these active substances.

## Revendications

1. Dispersions aqueuses de polymères, que l'on peut obtenir par le fait que l'on polymérise, en milieu aqueux, un mélange de monomères qui content 10 à 100% en poids de monomères contenant des halogènes, selon la méthode de la polymérisation en émulsion radicalaire, on règle le pH de la phase aqueuse de la dispersion aqueuse de polymère ainsi obtenue par l'addition d'agents basiques qui diffèrent de l'ammoniac comme aussi d'amines primaires et secondaires, à une valeur de 5 à 10 et on ajoute, par rapport au mélange des monomères, 0,005 à 1% en poids d'au moins une substance active appartenant au groupe formé par le benzaldéhyde, les dérivés du benzaldéhyde qui présentent un ou deux radicaux alkyle en C₁ à C₄ sur le noyau aromatique, l'alcool benzylique, le camphre, les esters de l'acide formique et d'alcanols en C₃ à C₆, les acides gras insaturés en C₁₀ à C₂₂, les orthosilicates de tétraalkyle dont les groupes alkyle comportent de 1 à 4 atomes de carbone, la bis(4-hydroxyphényl)sulfone, l'acide citrique et ses sels, ainsi que les sels de la guanidine avec des acides organiques ou inorganiques, où aussi bien l'addition des agents basiques qu'également celle d'au moins une substance active peut s'entreprendre avant, pendant et/ou après la polymérisation en émulsion.

2. Dispersions aqueuses de polymères suivant la revendication 1, que l'on peut obtenir par le fait que l'on utilise, à titre de substance active, au moins un composé appartenant au groupe formé par l'acide citrique et ses sels et les sels de la guanidine avec des acides organiques ou inorganiques.

3. Dispersions aqueuses de polymères suivant la revendication 1 ou 2, que l'on peut obtenir par le fait que l'on utilise, à titre de substance active, l'acide citrique, le sel de la guanidine avec l'acide chlorhydrique, ou un mélange de ses substances actives.
